# EUROPEAN PATENT APPLICATION

(11) **EP 2 117 138 A1**
(43) Date of publication of application: **11.11.2009**
(21) Application number: 07846098.7
(22) Date of filing: 19.12.2007
(51) Int. Cl.: H04B 10/02

(54) **AN OPTICAL SOURCE LINK TRANSMISSION DEVICE AND METHOD**

(30) Priority: 27.12.2006 CN 200610157764
(71) Applicant: Huawei Technologies Co., Ltd., Longgang District, Shenzhen Guangdong 518129 (CN)
(72) Inventor: DUAN, Yong, Shenzhen Guangdong 518129 (CN); TAO, Zhihui, Shenzhen Guangdong 518129 (CN)
(74) Representative: Thun, Clemens
(86) International application number: PCT/CN2007/071272
(87) International publication number: WO 2008/083575

(57) **Abstract**

An optical source link transmission device includes a sending end module and a receiving end module. A master optical source link, a backup optical source link, a master data channel, and a backup data channel are integrated into the sending end module; and a master receiving link and a backup receiving link are integrated into the receiving end module. When detecting a failure of service optical signals, the receiving end module sends channel handover information to the sending end module. The sending end module performs a handover between the master optical source link and the backup optical source link, and a handover between the master data channel and the backup data channel according to the channel handover information. An optical source link transmission method includes: sending channel handover information when detecting failure information of service signals, and performing a handover between a master optical source link and a backup optical source link, and a handover between a master data channel and a backup data channel according to the channel handover information received. The present invention can provide an effective protecting measure for the photoelectric signal transmission in the optical source link, and improve the reliability of the photoelectric integrated device.

## Description

The application claims the benefit of priority to Chinese Patent Application No. 200610157764.7, filed on Dec. 27, 2006 and entitled "OPTICAL SOURCE LINK TRANSMISSION DEVICE AND METHOD", which is incorporated herein by reference in its entirety.

### FIELD OF THE TECHNOLOGY

The present invention relates to the communication transmission field, in particular, to an optical source link transmission device and method.

### BACKGROUND

The dense wavelength-division multiplexing (DWDM) system technique has become a leading technique for long-distance and regional backbone transmission networks, and has gradually entered a metropolitan area. In the prior art, the DWDM system employs an independent element packaging, in which cards are fabricated for one or more optical elements, and the cards are connected through optical fibers.

With the development of the techniques, the price of the optical elements continuously drops. Until now, only the packaging cost of the optical elements maintains a high level, and becomes a bottleneck for restricting the cost of the optical elements. In a typical example, a core of a laser only costs a few dollars, but the packaging cost thereof requires hundreds of dollars.

In the past years, people are devoted to integrating a plurality of optical elements, such as a laser, a modulator, and a multiplexer/demultiplexer (MUX/DEMUX) into one semiconductor substrate, so as to reduce the respective packaging cost of the optical elements. Meanwhile, since the packaging is reduced, the bulks of sub-modules such as a sending sub-module, a receiving sub-module, and a monitoring sub-module in the DWDM system, are greatly reduced.

A photoelectric integrated circuit is a module or a device formed by integrating a plurality of optical elements and electric elements into the same semiconductor substrate and further providing an independent packaging and corresponding peripheral control circuits. Currently, the technique about the photoelectric integrated circuit has become increasingly mature.

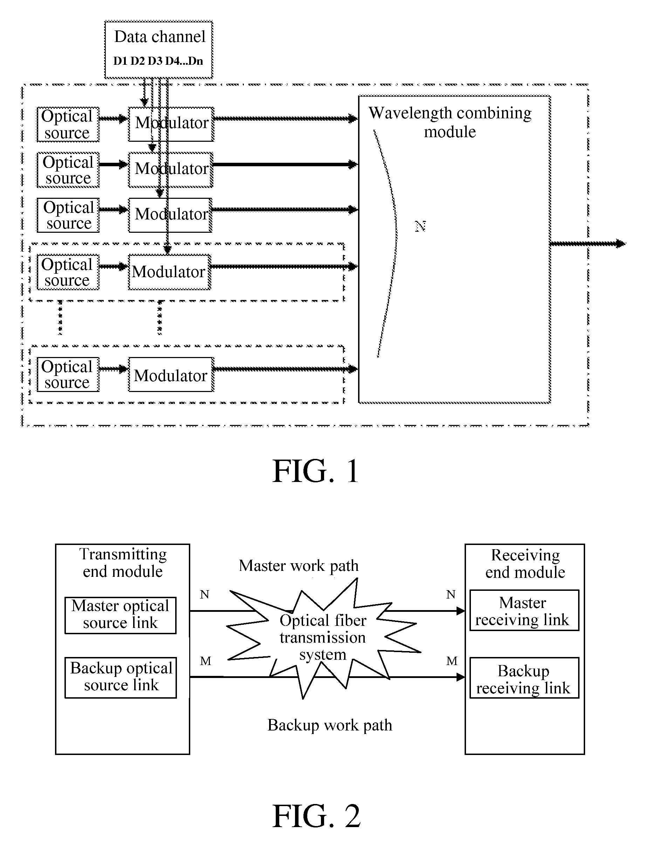

FIG. 1 is a schematic view of an inner structure of a sending end of a photoelectric integrated device in the prior art. As shown in FIG. 1, the sending end uses a plurality of fixed optical source links, heavy solid lines represent propagation paths of optical signals, and fine solid lines represent propagation paths of electric signals. The whole system is formed by N optical source links and a wavelength combining module. The N optical source links are respectively formed by connecting N optical sources of fixed wavelengths to N modulators in sequence. Data D1, D2, D3...and Dn output from a data channel module control the modulators to adjust the optical signals output from optical source modules, and the wavelength thereof may be changed within a small scope (approximately 1 nm) with the temperature. Finally, the N optical signals are combined by the wavelength combining module, and sent to a receiving end of the photoelectric integrated device.

As known from the above descriptions that, in the prior art, the photoelectric integrated device does not take any effective protecting measure for each optical source link, and each optical source link may function as a master link in the practical service transmission. In this case, if any one of the optical source links of the photoelectric integrated device fails, for example, the optical source does not emit lights or the modulator fails, the whole photoelectric integrated device cannot work normally, thereby lowering the reliability of the photoelectric integrated device. In order to enable the photoelectric integrated device to work again, a replacing manner must be adopted in the prior art. However, in the photoelectric integrated device, the elements of each optical source link are integrated into one substrate and packaged in a united way, so that the failed optical source link cannot be replaced separately. As a result, the whole photoelectric integrated circuit has to be replaced, thereby greatly increasing the repairing and maintenance cost.

### SUMMARY

The present invention is directed to an optical source link transmission device and method, which are capable of providing an effective protecting measure for the photoelectric signal transmission in an optical source link, thereby improving the reliability of a photoelectric integrated device.

The present invention provides an optical source link transmission device, which includes a sending end module and a receiving end module.

A master optical source link, a backup optical source link, a master data channel, and a backup data channel are integrated into the sending end module, and the master data channel and the backup data channel are respectively adapted to be provided for service data to modulate optical signals on the master optical source link and the backup optical source link.

A master receiving link and a backup receiving link are integrated into the receiving end module. The master receiving link and the backup receiving link are respectively adapted to receive and detect service optical signals output from the master optical source link and the backup optical source link, and send channel handover information to the sending end module when detecting a failure of the service optical signals.

The sending end module performs, according to the channel handover information received, a handover between the master optical source link and the backup optical source link, and a handover between the master data channel and the backup data channel.

The present invention further provides an optical source link transmission method, which includes the steps as follows:

A sending end of an optical source link receives channel handover information sent by a receiving end of the optical source link when detecting failure information of service signals.

A handover between a master optical source link and a backup optical source link, and a handover between a master data channel and a backup data channel are performed according to the channel handover information received.

In the technical solutions of the embodiments of the present invention, when one or more elements fail, which results in the failure of the whole fixed optical source link, the failure of any master optical source link can be detected, and the service transmission process of the failed master optical source link and corresponding data channel thereof is completed by using the backup optical source link with a wavelength adjusted appropriately and the corresponding backup data channel. Thus, when the master optical source link fails, not only the failure caused by the failure of the elements at the sending end is solved, but also the failure caused by network failures (such as fiber break failure of a working path) is solved, so the photoelectric integrated transmission link can still work normally, thereby providing effective protecting measures for the photoelectric integrated transmission link, and improving the reliability of the photoelectric integrated transmission link.

### BRIEF DESCRIPTION OF THE DRAWINGS

FIG. 1 is a schematic view of an inner structure of a sending end of a photoelectric integrated device in the prior art;

FIG. 2 is a systematic block diagram of a sending end module and a receiving end module of a transmission link according to an embodiment of the present invention;

FIG. 3 is a schematic view of a construction of a receiving end module according to an embodiment of the present invention;

FIG. 4 is a schematic view of a construction of a receiving link of a receiving end module according to an embodiment of the present invention;

FIG. 5 is a schematic view of a construction of a sending end module according to an embodiment of the present invention; and

FIG. 6 is a block diagram of a specific construction of an optical source link of a sending end module according to an embodiment of the present invention.

### DETAILED DESCRIPTION

The technical solutions of the present invention are described with reference to the embodiments as follows.

FIG. 2 is a systematic block diagram of a sending end module and a receiving end module of a transmission link according to an embodiment of the present invention. As shown in FIG. 2, a complete sending end and receiving end system of a photoelectric integrated transmission link includes a sending end module, an optical fiber transmission system, and a receiving end module.

The sending end module includes at least one master optical source link, at least one backup optical source link, at least one master data channel, and at least one backup data channel. The master optical source link, the backup optical source link, the master data channel, and the backup data channel are integrated into the sending end module, and service data modulates optical signals on the master optical source link and the backup optical source link through the master data channel and the backup data channel, so that the master optical source link and the backup optical source link output service optical signals. The master data channel is adapted to transmit service data when working normally. When the master optical source link corresponding to the master data channel fails, the backup data channel is adapted to transmit the service data to be transmitted by the master data channel, if the master data channel works normally. The master optical source link is adapted to transmit the service optical signals when working normally. When the master optical source link fails, the backup optical source link is adapted to transmit the service optical signals to be transmitted by the master optical source link, if the master optical source link works normally.

The receiving end module includes at least one master receiving link and at least one backup receiving link. The master receiving link and the backup receiving link are integrated into the receiving end module. The master receiving link and the backup receiving link are respectively adapted to receive and detect the service optical signals output from the master optical source link and the backup optical source link, and send channel handover information to the sending end module when detecting a failure of the service optical signals. The master receiving link is adapted to receive the service optical signals when working normally, and the backup receiving link is adapted to receive the service optical signals in a failure state. The optical fiber transmission system includes a master working path and a backup working path. The master working path is adapted to connect the master optical source link and the master receiving link, and the backup working path is adapted to connect the backup optical source link and the backup receiving link.

Specifically, the sending end module is adapted to convert a plurality of data signals from electric signals into optical signals, combine the optical signals into service optical signals, and send the service optical signals. The optical fiber transmission system is adapted to transmit the service optical signals. The receiving end module is adapted to receive the service optical signals, and de-combine the service optical signals into the plurality of data signals. Referring to the systematic block diagram shown in FIG. 2, the sending end module of an embodiment of the present invention is formed by (N+M) optical source links and a wavelength combining module corresponding to the output from each optical source link. Among the (N+M) optical source links, the N optical source links are master optical source links, which are connected to N master working paths of the optical fiber transmission system through the wavelength combining module. The N master working paths are adapted to transmit the service optical signals when the sending end and receiving end system of the photoelectric integrated transmission link works normally. The M optical source links are backup optical source links, which are connected to M backup working paths of the optical fiber transmission system through the wavelength combining module. The M backup working paths are adapted to transmit the service optical signals when the sending end and receiving end system of the photoelectric integrated transmission link fails. The master optical source links and the backup optical source links of the sending end module, and the master receiving links and the backup receiving links in the receiving end module are integrated into the same semiconductor substrate by integration process, and recently, such integration process has become increasingly mature.

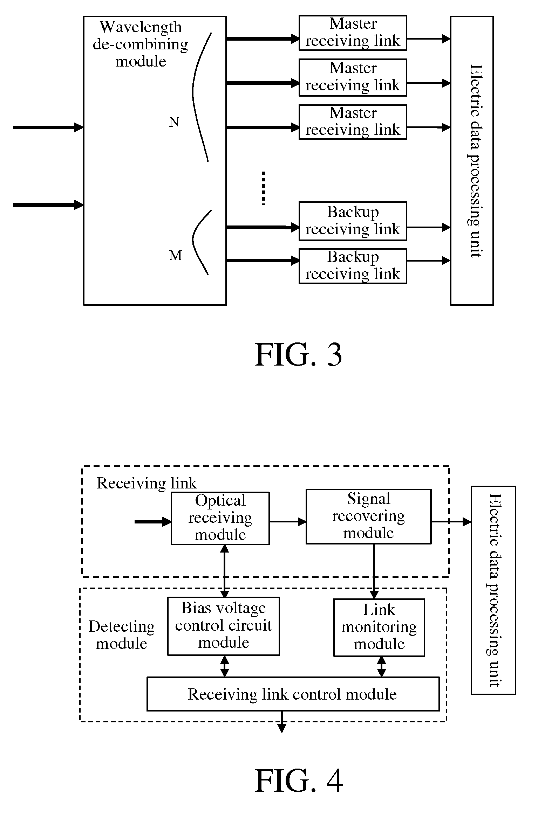

FIG. 3 is a schematic view of a construction of a receiving end module according to an embodiment of the present invention. As shown in FIG. 3, the receiving end module includes wavelength de-combining module, at least one master receiving link, at least one backup receiving link, and an electric data processing unit. The wavelength de-combining module may be realized through an array waveguide grating (AWG), and may also be realized through an (N×1) star multiplexer, and the wavelength de-combining module de-multiplexes one or more received optical composite signals into a plurality of optical signals by utilizing the physical characteristic of the waveguide, in which the physical characteristic is that the lights with different wavelengths have different delays in the waveguide transmission. During the normal work, only N channels are used, and the other M channels serve as redundant backups. The wavelength de-combining module in the receiving end of an embodiment of the present invention has (N+M) ports respectively corresponding to the N master receiving links and the M backup receiving links, and the master receiving links and the backup receiving links respectively transmit the signals output from the wavelength de-combining module to the electric data processing unit. The electric data processing unit is adapted to perform a cross processing on the electric signals from the receiving links.

FIG. 4 is a schematic view of a construction of a receiving link of a receiving end module according to an embodiment of the present invention. As shown in FIG. 4, the receiving end is formed by an optical receiving module, a signal recovering module, an electric data processing unit, and a detecting module. The optical receiving module is adapted to receive service optical signals transmitted from the working path and forward the service optical signals to the signal recovering module. The optical receiving module may be a PIN diode (semiconductor optical detector), or may be an avalanche photo diode (APD). The service optical signals are converted into electric signals by the optical receiving module, and then enter the electric data processing unit after being processed by the signal recovering module. The signal recovering module is adapted to perform a regeneration process, such as re-amplifying, re-timing, and re-shaping, on the service optical signals received according to the service demands. The detecting module is adapted to detect the performance of the service signals transmitted from the working path, and send channel handover information to the sending end module.

The detecting module includes a bias voltage control circuit module, a link monitoring module, and a receiving link control module. The bias voltage control circuit module is adapted to monitor optical power of the optical signals received by the optical receiving module, and monitor a bias voltage generated by the optical receiving module. The link monitoring module is adapted to monitor adjusting parameters and bit error rates of the electric signals in the signal recovering module. The receiving link control module is adapted to send link failure information to an optical source link control module of the sending end according to the received input information from the bias voltage control circuit module and the link monitoring module.

The electric data processing unit is adapted to perform the cross processing on the electric signals output from the signal recovering module, and the cross processing includes frame header demodulation, error correction, format identification, storing, copying, or other operations.

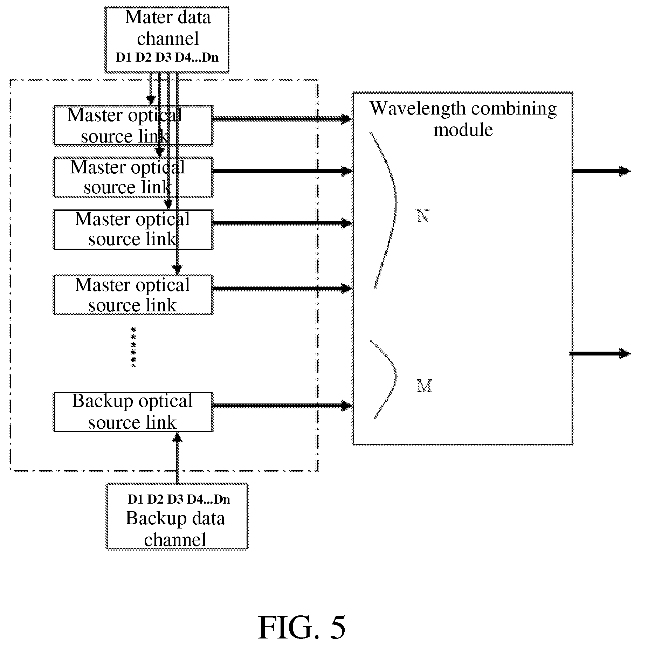

FIG. 5 is a schematic view of a construction of a sending end module according to an embodiment of the present invention. As shown in FIG. 5, the sending end module is formed by (N+M) optical source links and a corresponding wavelength combining module. Among the (N+M) optical source links, N optical source links are master optical source links, and M optical source links are backup optical source links. D1, D2, D3...and Dn data channels in the master data channels are respectively connected to the N master optical source links, and D1, D2, D3 ... and Dm data channels in the backup data channels are respectively connected to the M backup optical source links. The master optical source links and the backup optical source links are adapted to convert a plurality of data signals transmitted from the data channels into optical signals, and send the optical signals. The wavelength combining module is adapted to combine the optical signals sent from the master optical source links and the backup optical source links, and output optical composite signals. The wavelength combining module has a working principle the same as that of the wavelength de-combining module in FIG. 3, and may also be realized by an AWG or (N×1) star multiplexer. The wavelength combining module multiplexes the waves having different wavelengths into one or more optical composite signals by utilizing the physical characteristic of the waveguide, in which the physical characteristic is that the lights with different wavelengths have different delays in the waveguide transmission.

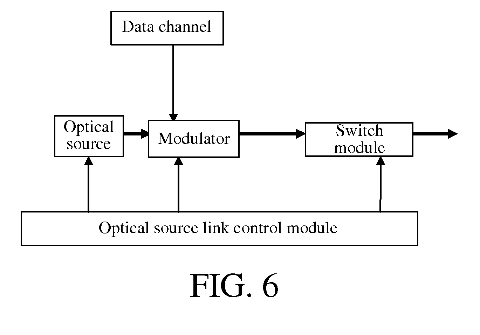

FIG. 6 is a block diagram of a specific construction of an optical source link of a sending end module according to an embodiment of the present invention. As shown in FIG. 6, the optical source link includes an optical source module, a modulator, a switch module, and an optical source link control module.

The optical source module is adapted to generate optical signals, which may be a distributed feed back (DFB) laser or a distributed Bragg reflector (DBR) laser.

The switch module is adapted to turn off or turn on the master optical source link and the backup optical source link. In the following two situations, the switch module of the optical source link in an embodiment of the present invention is used to turn off the optical signals to reduce the cross-talks caused by the optical signals. In a first situation, when the optical source link fails, the residual optical signals of the failed optical source link are quickly turned off. In a second situation, when the optical source link is in an on state, and the optical signal output is instable at this time, the optical signal output of the optical source link needs to be turned off.

The optical source link control module is adapted to control the on state of the switch module, adjust parameters of the optical signals sent by the optical source module, including controlling and adjusting the power and the temperature, and perform a handover between the master data channel and the backup data channel.

The modulator is adapted to modulate data signals transmitted from the data channel into optical signals, which may be formed by one or more electro-absorption (EA) modulators, or formed by one or more Mach Zehnder (MZ) modulators. If the manner of directly modulating the optical source module by using data is adopted, the modulator can be omitted, and in this case, a data control port is configured at the optical source, so that the magnitude of the bias current of the optical source is changed by using the data, thereby modulating the data.

The optical source link control module of the sending end module in an embodiment of the present invention further includes a lookup unit. The lookup unit is a control unit with a lookup table stored therein. Firstly, in the debugging stage of the backup optical source link, a lookup table is created, in which the detected values and the reference values of parameters of the optical signals (optical power, wavelength, etc.) correspond to each other one by one, and the lookup table is stored in the lookup unit. A lookup table of the detected optical power and the reference optical power is shown as follows.

| Detected Optical Power Value | 0 dBm | 1 dBm | 1.5 dBm | 2 dBm |
|---|---|---|---|---|
| Reference Optical Power Value | 100 | 150 | 170 | 210 |

An optical source link transmission method of an embodiment of the present invention includes the steps as follows.

1. When detecting failure information of service signals, a receiving end of a photoelectric integrated optical source link sends channel handover information to a sending end of the optical source link.

When the receiving end of the photoelectric integrated optical source link detects a failure of optical signals, the photoelectric integrated optical source link fails, and/or the optical signals fail on the working path of the optical transmission system (such as fiber break, element damage, etc.), and/or the receiving module of the optical integrated circuit fails, so that the signals received by the receiving end of the optical integrated circuit are deteriorated or even get lost. Here, the detection is realized by monitoring the optical power, adjusting parameters, and bit error rates of the service signals by the receiving end and monitoring the bias voltage of the receiving end. When the optical power received is reduced to a set scope, or the bit error rates received by the signal recovering circuit is increased and exceeds a certain threshold, a control system of the receiving link knows about the failure based on such information, and then delivers the channel handover information, which includes the number of the failed link, the number of the backup link, etc. The receiving end notifies the channel handover information to the sending end through a signaling or an automatic protection switching (APS) protocol. The signaling or the APS protocol is transferred via a specific protecting channel, or transferred at a specific overhead byte.

2. After receiving the channel handover information, the sending end of the optical source link turns off an optical switch of the failed optical source link.

3. An optical source module of a backup optical source link is adjusted in such a way that the parameters of the optical signals sent by the optical source module are the same as that of the optical signals sent by the optical source module of the failed optical source link during the normal work.

The reference value in the stored lookup table is looked up, and the parameters of the optical signals sent by the optical source module of the backup optical source link are controlled and adjusted according to the reference value in the lookup table. The parameters of the optical signals include the wavelength and the optical power. It is well known that, the feedback detection of the optical signals requires photoelectric conversion and analysis, so it is a rather slow process. The above controlling process is completely realized by the electric signals without detecting the optical signals of the optical source link, so the optical source link control module configured with the lookup unit can greatly shorten the time for starting the backup link.

4. The data channel of the failed optical source link is handed over to the backup data channel of the backup optical source link, and an optical switch of the backup optical source link is turned on.

As known from the above that, in an embodiment of the present invention, when the whole fixed optical source link fails due to a failure of one or more elements, the failure of any master optical source link can be detected, and the service transmission process of the failed master optical source link and the corresponding data channel thereof can be completed by using the backup optical source link with a wavelength adjusted appropriately and the corresponding backup data channel. Thus, when the master optical source link fails, not only the failure caused by the failure of the elements at the sending end is solved, but also the failure caused by network failures (such as fiber break failure of a working path) is solved, so the photoelectric integrated transmission link can still work normally, thereby providing effective protecting measures for the photoelectric integrated transmission link, and improving the reliability of the photoelectric integrated transmission link. When the photoelectric integrated optical source link is fabricated, the backup optical source link is fabricated on the same integrated board, and meanwhile, a master working path and a backup working path are both correspondingly disposed on the optical fiber transmission system. In this manner, many protecting measures are offered, and a certain failure positioning capability is achieved. For example, when the failure occurs, firstly, the optical source link is handed over, and if the service recovers, it is determined that the optical source link fails; otherwise, the optical fiber transmission system fails. Meanwhile, the failures caused by the network problem and the sending end can be solved flexibly, thereby improving the reliability of the operation of the system, and lowering the high cost resulted from the overall replacement of the integrated optical elements.

It will be apparent to those skilled in the art that various modifications and variations can be made to the present invention without departing from the scope of the invention. In view of the foregoing, it is intended that the present invention cover modifications and variations of this invention provided that they fall within the scope of the following claims and their equivalents.

## Claims

1. An optical source link transmission device, comprising a sending end module and a receiving end module, wherein
a master optical source link, a backup optical source link, a master data channel, and a backup data channel are integrated into the sending end module, and the master data channel and the backup data channel are respectively adapted to be provided for service data to modulate optical signals on the master optical source link and the backup optical source link;
a master receiving link and a backup receiving link are integrated into the receiving end module; and the master receiving link and the backup receiving link are respectively adapted to receive and detect service optical signals output from the master optical source link and the backup optical source link, and send channel handover information to the sending end module when detecting a failure of the service optical signals; and
the sending end module performs a handover between the master optical source link and the backup optical source link, and a handover between the master data channel and the backup data channel according to the channel handover information received.

2. The optical source link transmission device according to claim 1, wherein the master optical source link and the backup optical source link each comprise:
an optical source module, adapted to generate the optical signals;
a modulator, adapted to modulate the optical signals into the service optical signals according to the service data transmitted from the master data channel and the backup data channel;
a switch module, adapted to turn off or turn on the master optical source link and the backup optical source link; and
an optical source link control module, adapted to control an on state of the switch module, adjust parameters of the optical signals sent by the optical source module, and perform a handover between the master data channel and the backup data channel.

3. The optical source link transmission device according to claim 2, wherein the optical source link control module further comprises:
a lookup unit, adapted to look up a reference value corresponding to a detected value of the parameters of the optical signals, and to control and adjust the parameters of the optical signals sent by the optical source module of the backup optical source link according to the reference value.

4. The optical source link transmission device according to claim 2, wherein the master receiving link and the backup receiving link in the receiving end module each specifically comprise an optical receiving module, a signal recovering module, an electric data processing unit and a detecting module; the optical receiving module is adapted to receive the service optical signals and forward the service optical signals to the signal recovering module; the signal recovering module is adapted to perform a regeneration process on the service optical signals received and output electric signals; the electric data processing unit is adapted to perform a cross processing on the electric signals; and the detecting module is adapted to detect performance of the service optical signals, and send the channel handover information to the sending end module when detecting a failure of the service optical signals.

5. The optical source link transmission device according to claim 4, wherein the detecting module specifically comprises:
a bias voltage control circuit module, adapted to monitor optical powers of the service optical signals received by the optical receiving module, and monitor a bias voltage generated by the optical receiving module;
a link monitoring module, adapted to monitor adjusting parameters and bit error rates of the service optical signals in the signal recovering module; and
a receiving link control module, adapted to send the channel handover information to the sending end module according to received input information of the bias voltage control circuit module and the link monitoring module.

6. An optical source link transmission method, comprising:
receiving, by a sending end of an optical source link, channel handover information sent by a receiving end of the optical source link when failure information of service signals is detected by the receiving end of the optical source link; and
performing a handover between a master optical source link and a backup optical source link, and a handover between a master data channel and a backup data channel according to the channel handover information received.

7. The optical source link transmission method according to claim 6, wherein the performing the handover between the master optical source link and the backup optical source link further comprises:
turning off a failed optical source link according to the channel handover information received;
adjusting an optical source module of the backup optical source link, and replacing the failed optical source link by the optical source module of the backup optical source link; and
handing over a data channel of the failed optical source link to a corresponding backup data channel of the backup optical source link.

8. The optical source link transmission method according to claim 7, wherein parameters of optical signals sent by the optical source module of the backup optical source link after being adjusted are the same as that of optical signals sent by the optical source module of the failed optical source link during normal work.

9. The optical source link transmission method according to claim 6, wherein the channel handover information sent by the receiving end of the optical source link when the failure information of the service signals is detected by the receiving end of the optical source link specifically comprises:
the channel handover information sent to the sending end of the optical source link when the receiving end of the optical source link detecting that optical power is reduced to a set scope and/or a bit error rate reaches a preset threshold.

10. The optical source link transmission method according to claim 6, wherein the failure information comprises failure information of the optical source link, and/or failure information of a working path in an optical transmission system.

11. The optical source link transmission method according to claim 7, wherein the adjusting the optical source module of the backup optical source link further comprises: looking up a reference value corresponding to a detected value of parameters of optical signals, and controlling and adjusting the parameters of the optical signals sent by the optical source module of the backup optical source link according to the reference value.

12. The optical source link transmission method according to claim 8, wherein the parameters of the optical signals comprises a wavelength and an optical power.
